# EUROPEAN PATENT SPECIFICATION

(11) **EP 4 455 618 B1**
(45) Date of publication and mention of the grant of the patent: **01.04.2026**
(21) Application number: 23801658.8
(22) Date of filing: 28.09.2023
(51) Int. Cl.: B61L 27/53, B61L 5/10, G01L 1/24, B61K 9/08

(54) **METHOD AND SYSTEM FOR MONITORING CREEP AND CLOSING FORCE OF SWITCH RAIL AND EXTERNAL LOCKING DEVICE OF TURNOUT**
VERFAHREN UND SYSTEM ZUR ÜBERWACHUNG DER KRIECHENDEN UND NAHANHAFTENDEN KRAFT EINER WEICHENZUNGENSCHIENE UND EXTERNE VERRIEGELUNGSVORRICHTUNG
PROCÉDÉ ET SYSTÈME DE SURVEILLANCE DE CHEMINEMENT ET DE FORCE DE FERMETURE DE LAME D'AIGUILLE ET DISPOSITIF DE VERROUILLAGE EXTERNE DE BRANCHEMENT

(30) Priority: 14.03.2023 CN 202310266578
(43) Date of publication of application: 30.10.2024
(73) Proprietor: CRSC Research & Design Institute Group Co., Ltd., Beijing 100070 (CN)
(72) Inventor: ZHANG, Liang, Fengtai District Beijing 100070 (CN); ZHOU, Yafu, Fengtai District Beijing 100070 (CN); XU, Ming, Fengtai District Beijing 100070 (CN); CHEN, Hao, Fengtai District Beijing 100070 (CN); LI, Yufei, Fengtai District Beijing 100070 (CN); LI, Ji, Fengtai District Beijing 100070 (CN); LIU, Zhenhua, Fengtai District Beijing 100070 (CN)
(74) Representative: Meissner Bolte Partnerschaft mbB
(86) International application number: PCT/CN2023/122820
(87) International publication number: WO 2024/187730

(56) References cited:
- EP-A1- 1 270 363
- CN-A- 102 303 626
- CN-A- 110 160 679
- CN-A- 110 422 198
- CN-A- 114 684 218
- CN-A- 116 465 453
- US-A1- 2022 299 082

## Description

### TECHNICAL FIELD

The present invention belongs to the technical field of rail traffic, and particularly relates to a method and system for monitoring crawling and a close-attaching force of a turnout tongue rail and external locking apparatus.

### BACKGROUND

A turnout is a line device used when a locomotive turns from one rail to another rail, is an essential rail device for a train to change a line or cross a line, is a weak link of a driving device, has the characteristics of complex structure, large load, short service life, large maintenance input amount and the like, and becomes one of the key technologies for limiting the running speed of the train.

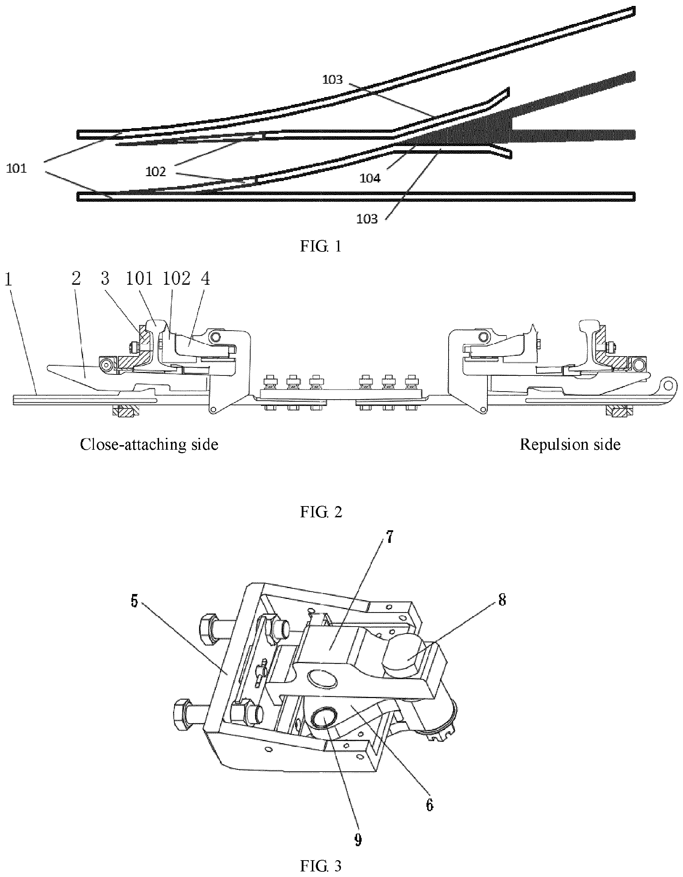

Tongue rail close attachment means that a tongue rail 102 in a driving direction is closely attached to an inner side of a stock rail 101, that is, turnout close attachment. As shown in FIG. 1, a turnout includes a stock rail 101, a tongue rail 102, a wing rail 103 and a point rail 104. The tongue rail 102 is closely attached to the stock rail 101 after the tongue rail 102 and the stock rail 101 are locked. At this time, a pressure of the tongue rail 102 on the stock rail 101 is a tongue rail close-attaching force. In an ideal state, a tangent surface of the tongue rail 102 is completely matched with an attaching surface of the stock rail 101, and the tongue rail 102 is just attached to the stock rail 101 without generating a pressure. However, in the actual running process, the attaching surface of the tongue rail 102 and the stock rail 101 cannot be completely matched; furthermore, after the turnout works for a long time, a steel rail will be deformed due to a subgrade or other reason; and to ensure that the tongue rail and the stock rail can be completely attached to each other, the tongue rail 102 is closely attached to the stock rail 101 at a certain pressure. The tongue rail close-attaching force should be within a certain range. The excessively large tongue rail close-attaching force is unfavorable for a ballast bed and a conversion device, and the excessively small tongue rail close-attaching force is unfavorable for safety.

The tongue rail crawling quantity refers to a longitudinal displacement of the turnout tongue rail 102 relative to the stock rail 101; the tongue rail 102 and the stock rail 101 will expand when being heated and contract when being cooled at different temperatures to generate a forward and backward telescopic crawling effect of the tongue rail 102 relative to the stock rail 101; and in a case that the tongue rail 102 performs telescopic crawling seriously, the external lock apparatus connected to the tongue rail will be displaced along with the tongue rail 102, thereby affecting the normal working state of the external locking apparatus, even causing the turnout conversion failure. The excessively large crawling quantity of the tongue rail 102 will easily cause failures such as turnout running indication and turnout jam; and the excessively large crawling quantity of the external locking apparatus will cause the jam of a turnout conversion device and the tongue rail 102 cannot be converted in place, thereby affecting the operation of a train.

Poor turnout close attachment will cause the instability of the train, and will cause the train derailment accident in severe cases, thereby causing great economic loss and personal safety accidents and affecting the railway operation safety. Therefore, it is of great significance for monitoring the crawling quantities and the turnout close-attaching state of the tongue rail 102 and the external locking apparatus in real time.

In the existing technical solution, the patent application CN110160679A discloses a method and system for detecting a close-attaching force of a railway turnout, and a close-attaching force sensor is mounted between a closed iron and a locking frame. A method for detecting a close-attaching force is disclosed, but the close-attaching force cannot be monitored in real time.

In the existing technical solution, the patent application CN209945601U discloses an adjustable gap close-attaching force sensor, which is mounted and located between a tongue rail and a stock rail and cannot meet the requirement of monitoring the environment on site for a long time.

In the existing technical solution, the patent application CN113136752A discloses an apparatus and a method for calibrating a tongue rail crawling and close-attaching gap measurement device, and discloses a close-attaching force detection device, which is mounted by punching a rail. The device is mounted beside the rail, has a complex structure, is tedious in mounting, is greatly disturbed by the outdoor environment, and cannot meet the long-term on-site monitoring requirement.

In conclusion, in the prior art, a data relationship between the crawling quantities and the turnout close-attaching force of the tongue rail and the external locking apparatus cannot be detected at the same time, related sensing units are required to be mounted on the tongue rail and the stock rail, so the mounting is complex and the stability of the on-site long-term use is low.

EP 1 270 363 A1 relates to a monitoring device for the end positions swiveling rails of railway switches. These rails are pivoted on a track body. In the track body embedded inductive rail switches, those in the two end positions of the movable rails of these are operated without contact and end position messages submit. This known monitoring device is due Their constructive design is only suitable for to detect certain end positions of a rail, namely those resulting from the stroke of the switch and the constructive arrangement of one for triggering a message used counterpart on the movable rail, the so-called Switch tongue, opposite the continuous rail results. For recognizing other end positions of the movable rail further to the tip of the tongue or to the root of the tongue stationary sensors because of the changed stroke in there other mutual distance to each other and to the continuous Rail be arranged. This requires an elaborate process Position calculation for the sensors and complex assembly on site. The end position detection of a movable rail is arbitrarily imprecise; the end position message is also given if the end position to be detected deviates by a few millimeters from the specified target end position.

CN 102 303 626 relates to railway switch safety monitoring technology field and fiber grating sensing technology field, specially to a kind of fiber grating railway switch close contact monitoring device.

### SUMMARY

In view of the above problem, the invention is set out in the independent claims. Preferred embodiments are defined by the dependent claims.

The present invention has the following beneficial effects: according to the embodiments of the present invention, a sensing unit is mounted on the external locking apparatus, and it is unnecessary to punch a ballast bed and a rail to mount other instruments and sensing devices; and the method is simple and convenient in mounting and simple in construction. According to the present invention, the crawling quantity and the close-attaching force of the tongue rail and the external locking apparatus can be monitored at the same time.

Other features and advantages of the present invention will be described in the following description, and some of these will become apparent from the description or be understood by implementing the present invention. The objectives and other advantages of the present invention can be implemented or obtained by structures indicated in the description and accompanying drawings.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic diagram of turnout close attachment;
FIG. 2 is a structural schematic diagram of an external locking apparatus in the prior art;
FIG. 3 is a structural schematic diagram of a tongue rail connecting assembly in the prior art;
FIG. 4a is a schematic diagram of a first state after the expansion and contraction of a tongue rail on a close-attaching side;
FIG. 4b is a schematic diagram of an original state of a tongue rail and a state after the expansion and contraction of a tongue rail on a repulsion side;
FIG. 4c is a schematic diagram of a second state after the expansion and contraction of a tongue rail on a close-attaching side;
FIG. 5 is an analysis diagram of a stress at a position where a latch hook assembly is connected to a connecting iron base after close attachment of a tongue rail according to an embodiment of the present invention;
FIG. 6 is a mounting schematic diagram of each sensing unit on an external locking apparatus according to an embodiment of the present invention;
FIG. 7 is a mounting schematic diagram of a magnetic field inductive sensor according to an embodiment of the present invention; and
FIG. 8 is a structural schematic diagram of a system for monitoring crawling and a close-attaching force of a turnout tongue rail and an external locking apparatus according to an embodiment of the present invention.

In the drawings: 101. stock rail; 102. tongue rail; 103. wing rail; 104. point rail; 1. locking rod assembly; 2. latch hook assembly; 3. locking frame assembly; 4. tongue rail connecting assembly; 5. tongue rail connecting iron; 6. push-pull plate; 7. connecting iron base; 8. connecting iron base shaft; 9. sliding block pin shaft part; 10. locking frame; 11. locking iron; 12. elastic roller; 13. magnetic grid ruler; 14. magnetic field inductive sensor; 15. optical fiber pin type sensor; 16. close attachment adjusting sheet.

### DETAILED DESCRIPTION OF THE EMBODIMENTS

To make the objectives, technical solutions and advantages of the embodiments of the present invention clearer, the technical solutions in the embodiments of the present invention are described below clearly and completely with reference to the accompanying drawings in the embodiments of the present invention. Apparently, the described embodiments are some rather than all of the embodiments. Based on the embodiments of the present invention, all the other embodiments obtained by those of ordinary skill in the art without creative effort are within the protection scope of the present invention.

It should be noted that terms "first" and "second" in this application are used to distinguish similar objects, and do not need to be used to describe a specific order or sequence. It should be understood that such used data is exchangeable in a proper case, so that the embodiments of the present application described herein are facilitated. In the present application, an orientation or position relationship indicated by terms such as "upper", "lower", "left", "right", "front", "rear", "top", "bottom", "inner", "outer", "middle", "vertical", "horizontal", "transverse" and "longitudinal" is an orientation or position relationship shown in the drawings.

Embodiments of the present invention provide a method and system for monitoring crawling and a close-attaching force of a turnout tongue rail 102 and an external locking apparatus without punching a ballast bed and a rail to mount other instruments and sensing devices, thereby achieving simple and convenient mounting and simple construction, and detecting a data relationship between crawling quantities and a close-attaching force of the tongue rail 102 and the external locking apparatus.

As shown in FIG. 2, the embodiments of the present invention simply describe the structure and action performance of the external locking apparatus: the external locking apparatus includes a locking rod assembly 1, a latch hook assembly 2, a locking frame assembly 3 and a tongue rail connecting assembly 4; the locking frame assembly 3 is fixedly mounted on an outer side of the stock rail 101; the locking rod assembly 1 is arranged below the stock rail 101; the latch hook assembly 2 includes a straight-line part and an arc-shaped part which are connected to each other; the straight-line part of the latch hook assembly 2 is arranged between the locking frame assembly 3 and the locking rod assembly 1; and the arc-shaped part of the latch hook assembly 2 is connected to the tongue rail connecting assembly 4.

An arc-shaped groove is formed at an upper end of the straight-line part of the latch hook assembly 2 close to the locking frame assembly 3, a groove is formed at a lower end of the straight-line part of the latch hook assembly 2, and a protrusion matched with the groove is arranged at an upper part of the locking rod assembly 1.

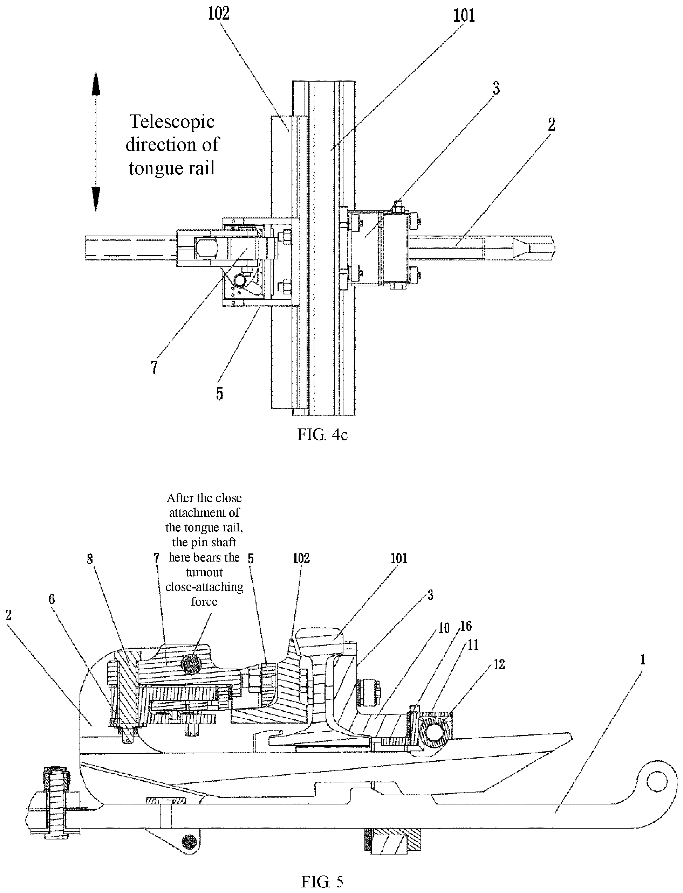

As shown in FIG. 5, the locking frame assembly 3 includes a locking frame 10, locking iron 11 and an elastic roller 12; the locking frame 10 is detachably connected to an outer side of the stock rail 101 through a bolt; for example, the locking frame 10 is L-shaped and the locking iron 11 is Z-shaped; a close attachment adjusting sheet 16 is arranged between the locking frame 10 and the locking iron 11; and the turnout state is adjusted by increasing and reducing the close attachment adjusting sheet 16. The elastic roller 12 is mounted on the locking iron 11.

As shown in FIG. 3, the tongue rail connecting assembly 4 includes a tongue rail connecting iron 5, a push-pull plate 6, a connecting iron base 7, a connecting iron base shaft 8 and a sliding block pin shaft part 9; one end of the tongue rail connecting iron 5 is connected to the tongue rail 102 through a bolt; a first end of the push-pull plate 6 is hinged with the tongue rail connecting iron 5 through the sliding block pin shaft part 9; the connecting iron base 7 is arranged above the push-pull plate 6; an L-shaped thrust part is arranged at a first end of the connecting iron base 7; a second end of the connecting iron base 7 is rotatably connected to a second end of the push-pull plate 6 through the connecting iron base shaft 8; the push-pull plate 6 rotates around the connecting iron base shaft 8; the connecting iron base 7 is provided with a pin hole; a pin shaft is arranged in the pin hole; and the arc-shaped part of the latch hook assembly 2 is connected to the connecting iron base 7 through the pin shaft.

On one hand, the tongue rail connecting assembly 4 cooperates with other assemblies to unlock, convert and lock the turnout; and on the other hand, the tongue rail connecting assembly has a function adapting to the expansion and contraction of the tongue rail 102.

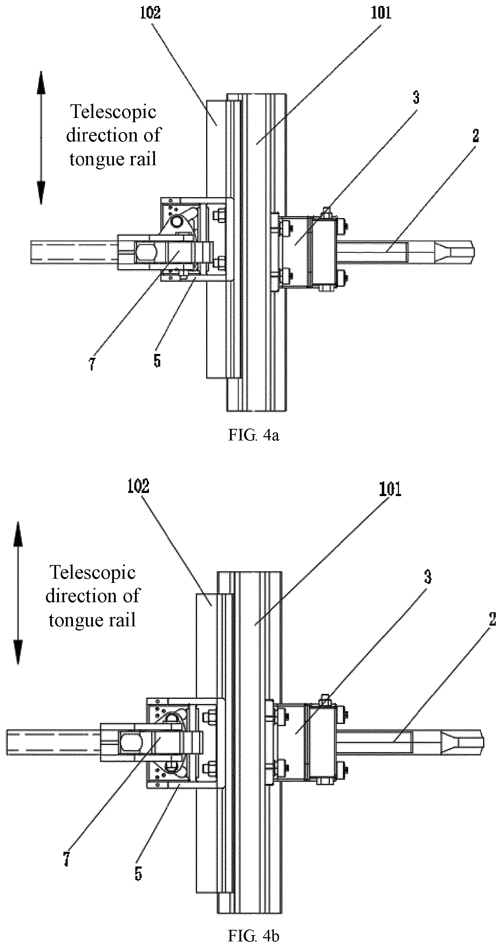

The working principle of the external locking apparatus adapting to the crawling of the tongue rail 102 is: during expansion and contraction of the tongue rail 102 on a close-attaching side, a crank sliding block mechanism formed by the connecting iron base 7, the latch hook and the push-pull plate 6 remains motionless, the tongue rail connecting iron 5 follows the tongue rail 102 to move in an extension direction of the stock rail 101, a fan-shaped arc-shaped surface of the push-pull plate 6 only rotate around an axis, the connecting iron base 7 and the tongue rail connecting iron 5 are displaced relatively, and this displacement amount is the crawling quantities of the tongue rail 102 and the external locking apparatus; the motion status of the mechanism is shown in FIG. 4a and FIG. 4c; FIG. 4a is a schematic diagram of a first state after the expansion and contraction of a tongue rail 102 on a close-attaching side; FIG. 4c is a schematic diagram of a second state after the expansion and contraction of a tongue rail 102 on a close-attaching side; and as shown in FIG. 4b, FIG. 4b is a schematic diagram of an original stat of a tongue rail 102 and a state after the expansion and contraction of a tongue rail 102 on a repulsion side.

The stress analysis of the external locking apparatus is: the tongue rail 102 is converted from the repulsion side to the close-attaching side, the locking rod assembly 1 pushes the latch hook assembly 2, the latch hook assembly 2 transfers a force to the connecting iron base 7 through the pin shaft, and the connecting iron base 7 transfers a force to the push-pull plate 6 through the connecting iron base shaft 8, so that the tongue rail connecting iron 5 is pushed until the arc-shaped groove of the latch hook and the elastic roller 12 are locked; and at this time, the tongue rail 102 is converted in place to lock the turnout, and the stress of the pin shaft is the turnout close-attaching force.

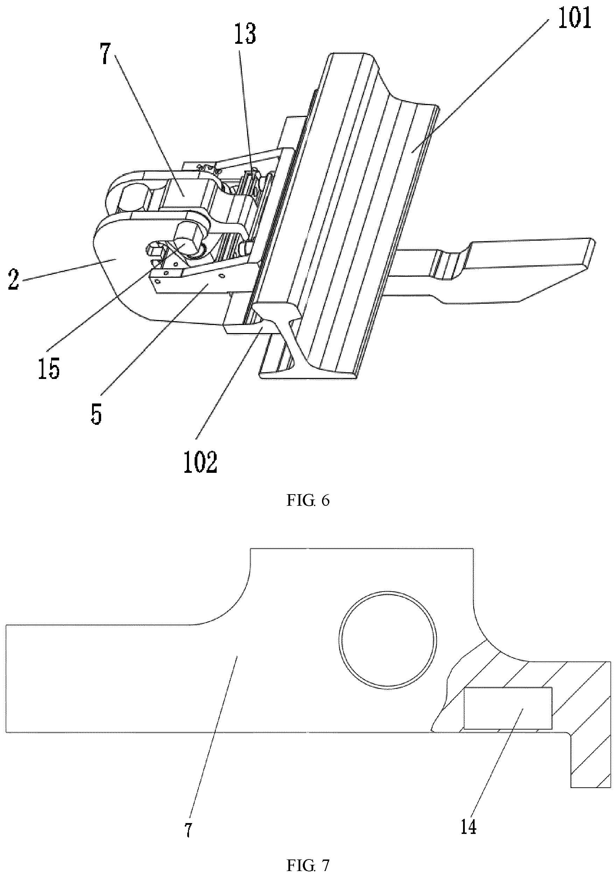

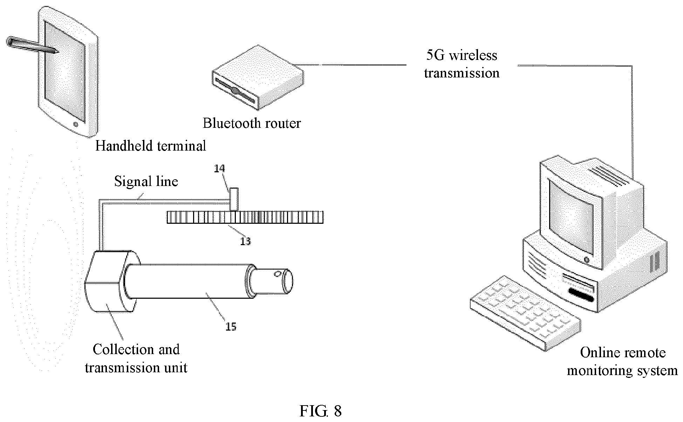

Based on the structure of the external locking apparatus, the embodiments of the present invention provide a system for monitoring crawling and a close-attaching force of a turnout tongue rail 102 and an external locking apparatus, as shown in FIG. 6 to FIG. 8, including a magnetic grid ruler 13, a magnetic field inductive sensor 14, an optical fiber pin type sensor 15, a data transmission processing apparatus, a Bluetooth router and an online remote monitoring system; and the data transmission processing apparatus includes a collection and transmission unit and a handheld terminal, for example, the handheld terminal may be a mobile phone, a tablet computer and the like.

The magnetic grid ruler 13 is arranged on the tongue rail connecting iron 5, the magnetic field inductive sensor 14 is arranged on the connecting iron base 7, the optical fiber pin type sensor 15 is arranged in a pin hole of the connecting iron base 7, and the arc-shaped part of the latch hook assembly 2 is connected to the connecting iron base 7 through the optical fiber pin type sensor 15. According to the embodiments of the present invention, the connecting pin shaft of the latch hook assembly 2 and the connecting iron base 7 is replaced with the optical fiber pin type sensor 15, and the turnout close-attaching force is acquired through the real-time detection of the optical fiber pin type sensor 15.

According to the present invention, the crawling quantity of the external locking apparatus is monitored by the magnetic grid ruler 13 and the magnetic field inductive sensor 14, the magnetic grid is packaged in the tongue rail connecting iron 5, and the magnetic field inductive sensor 14 is packaged in the connecting iron base 7, so that the system is simple and convenient in mounting, high in sealing degree and suitable for the outdoor turnout environment, and has high long-term stability, high reliability and measurement accuracy capable of reaching ±0.1 mm.

The collection and transmission unit is embedded at the head of the optical fiber pin type sensor 15, the magnetic field inductive sensor 14 is connected to the collection and transmission unit through a signal line, the optical fiber pin type sensor 15 is connected to the collection and transmission unit through a signal line, the collection and transmission unit is connected to the handheld terminal wirelessly, and the collection and transmission unit is connected to the online remote monitoring system through the Bluetooth router.

For example, the collection and transmission unit includes a battery, a processor circuit and a Bluetooth transmitter; the battery may supply power to the magnetic field inductive sensor 14 and the optical fiber pin type sensor 15 through a signal cable; the processing circuit may convert an analog electrical signal output by a magnetic signal and an optical fiber signal into a digital quantity electrical signal; the Bluetooth transmitter performs data transmission on the converted digital quantity electrical, has a communication protocol commonly used for Bluetooth with low power consumption, and may be in communication connection with the handheld terminal (such as a mobile phone and a tablet computer) with a Bluetooth communication function, thereby achieving the function of detecting the collected data on line through the handheld terminal; and the handheld terminal may directly check the crawling values of the tongue rail 102 and the external locking apparatus, the crawling direction of the tongue rail 102 and the turnout close-attaching force value.

The collection and transmission unit according to the embodiments of the present invention may convert the acquired analog electrical signal into the digital quantity electrical signal, and perform data transmission through the communication protocol commonly used for the Bluetooth with low power consumption, thereby saving the mounting space of on-site cable arrangement. The collection and transmission unit has a built-in power supply, is only required to change the built-in power supply on time and is not required to be connected to an external power supply, thereby saving space.

For example, according to the embodiments of the present invention, the online monitoring function is achieved by the Bluetooth router, a Bluetooth signal emitted by the collection and transmission unit can be received, and data can be transferred to the online remote monitoring system through a 5G wireless network. During use, the Bluetooth router is required to be placed within a 30-meter radius (60-meter diameter) of the collection and transmission unit. Compared with the router of other communication protocols, the transmission distance is short, but the on-site device transmission requirement can be met; furthermore, the Bluetooth router has the advantages of low price, low transmission power consumption and the like and redundant transmission cables are not required, so that wireless transmission of the online monitoring data can be achieved.

The working principle of the optical fiber pin type sensor is: a fiber bragg grating as a sensitive component is laid in the pin shaft, the stress of the pin shaft and the change of the strain are converted into the movement of the fiber bragg grating wavelength, the offset of the fiber bragg grating wavelength is detected by the collection and transmission unit, and the stress of the pin shaft and the strain are detected in real time according to a mapping relationship between the wavelength offset and the strain quantity of the pin shaft. According to the embodiments of the present invention, by adoption of the optical fiber pin type sensor, high anti-disturbance performance, high measurement stability and high accuracy are achieved, and the problem of zero drift is avoided.

In actual application, firstly, the tongue rail connecting iron 5 and the connecting iron base 7 are slotted, the magnetic grid ruler 13 with an appropriate size is intercepted and is fixed on the tongue rail connecting iron 5 through a double-faced adhesive tape, and then the magnetic grid ruler 13 is poured and sealed in the tongue rail connecting iron 5 by using an epoxy adhesive. Meanwhile, the magnetic field inductive sensor 14 is poured and sealed in the connecting iron base 7, and after the epoxy adhesive is solidified completely, the surface of the epoxy adhesive after pouring and sealing is ground smoothly by a grinding machine, thereby ensuring that the surface of the treated epoxy adhesive, the tongue rail connecting iron 5 and the connecting iron base 7 are flat and smooth, the mechanical strength meets the use requirement and normal use is not affected. The pin shaft for connecting the connecting iron base 7 and the latch hook assembly 2 is replaced with the optical fiber pin type sensor 15 with the same size, a signal line of the magnetic field sensor is accessed into the collection and transmission unit at the head of the optical fiber pin type sensor 15, and the connection position is subjected to hot melting by a heat shrinkable tube.

According to the monitoring system provided by the embodiments of the present invention, each sensing unit is mounted on an existing external locking apparatus, it is unnecessary to punch a ballast bed and a rail to mount other instruments and sensing devices. The method is simple and convenient in mounting and simple in construction. Furthermore, the crawling quantities and the close-attaching force of the tongue rail 102 and the external locking apparatus are monitored at the same time.

Based on the system for monitoring the crawling and the close-attaching force of the turnout tongue rail 102 and the external locking apparatus, the embodiments of the present invention further provide a method for monitoring crawling and a close-attaching force of a turnout tongue rail 102 and an external locking apparatus, including the following steps:
S1: in a case that a tongue rail connecting iron 5 and a connecting iron base 7 are relatively displaced, a magnetic field inductive sensor 14 converts the number of acquired magnetic grids passing through a magnetic grid ruler 13 and a magnetic pickup sequence into a magnetic signal.
S2: in a case that a latch hook assembly 2 pushes the connecting iron base 7, an optical fiber pin type sensor 15 converts a force applied to the optical fiber pin type sensor into an optical fiber signal.
S3: a data transmission processing apparatus processes the received magnetic signal to acquire the crawling quantities of the tongue rail 102 and the external locking apparatus, specifically as follows:
   the collection and transmission unit converts the magnetic signal acquired from the magnetic field inductive sensor 14 into a first digital quantity electrical signal and sends the first digital quantity electrical signal to a handheld terminal through a wireless network; and the handheld terminal processes the received first digital quantity electrical signal to acquire and display crawling distance information and crawling direction information of the tongue rail 102 and the external locking apparatus, that is, acquire the crawling quantities of the tongue rail 102 and the external locking apparatus.

According to the embodiments of the present invention, the crawling quantity of the external locking apparatus is monitored to monitor the crawling quantity of the tongue rail 102 in real time, thereby providing powerful data support for an on-site maintainer.
S4: the data transmission processing apparatus processes the received optical fiber signal to obtain a turnout close-attaching force, specifically as follows:
the collection and transmission unit converts the optical fiber signal acquired from the optical fiber pin type sensor 15 into a second digital quantity electrical signal and sends the second digital quantity electrical signal to the handheld terminal through the wireless network; and
the handheld terminal processes the received second digital quantity electrical signal to acquire and display a force applied to the optical fiber pin type sensor 15, that is, acquire the turnout close-attaching force.

The method for monitoring the crawling and close-attaching force of the tongue rail 102 and the external locking apparatus further includes the following steps:
S5: a data relationship between the crawling quantities of the tongue rail 102 and the external locking apparatus and the turnout close-attaching force, specifically as follows:
   the collection and transmission unit sends the first digital quantity electrical signal to an online remote monitoring system through the Bluetooth router; the online remote monitoring system processes the received first digital quantity electrical signal to acquire and store the crawling distance information and the crawling direction information of the tongue rail 102 and the external locking apparatus; the collection and transmission unit sends the second digital quantity electrical signal to the online remote monitoring system through the Bluetooth router; the online remote monitoring system processes the second digital quantity electrical signal to acquire and store a force applied to the optical fiber pint type sensor 15; the online remote monitoring system determines a data relationship between the crawling quantities of the tongue rail 102 and the external locking apparatus and the turnout close-attaching force according to the acquired crawling distance information and crawling direction information of the tongue rail 102 and the external locking apparatus and the acquired force applied to the optical fiber pin type sensor 15.
S6: a data curve of the crawling quantities of the tongue rail 102 and the external locking apparatus and time, and a data curve of the turnout close-attaching force and time are generated.

The online remote monitoring system generates the data curve of the crawling quantities of the tongue rail 102 and the external locking apparatus and time according to the real-time acquired crawling distance information and crawling direction information of the tongue rail 102 and the external locking apparatus; and the online remote monitoring system generates the data curve of the turnout close-attaching force and time according to the real-time acquired force applied to the optical fiber pin type sensor 15.

S7: in a case that crawling distances of the tongue rail 102 and the external locking apparatus exceed a set value and/or in a case that the force applied to the optical fiber pin type sensor 15 exceeds a set value, the online remote monitoring system is further configured to give an alarm through voice and/or an optical signal and send alarm-maintaining text information to a maintainer.

Although the present invention is described in detail with reference to the above embodiments, those of ordinary skill in the art should understand: the technical solutions recorded in the above embodiments still can be modified, or part of the technical features can be replaced equivalently.

## Claims

1. A method for monitoring a longitudinal displacement and a close-attaching force of a turnout tongue rail (102) and an external locking apparatus, comprising the following steps:
in a case that a tongue rail (102) connecting iron (5) and a connecting iron base (7) are relatively displaced, converting, by a magnetic field inductive sensor (14), the number of acquired magnetic grids passing through a magnetic grid ruler (13) and a magnetic pickup sequence into a magnetic signal, whereby the magnetic grid ruler (13) is arranged on the tongue rail (102) connecting iron (5), and the magnetic field inductive sensor (14) is arranged on the connecting iron base (7);
in a case that a latch hook assembly (2) pushes the connecting iron base (7), converting, by an optical fiber pin type sensor (15), a force applied to the optical fiber pin type sensor (15) into an optical fiber signal, whereby the optical fiber pin type sensor (15) is arranged in a pin hole on the connecting iron base (7), and the latch hook assembly (2) is connected to the connecting iron base (7) through the optical fiber pin type sensor (15);
processing the magnetic signal to acquire longitudinal displacement quantities of the tongue rail (102) and the external locking apparatus; and
processing the optical fiber signal to acquire a turnout close-attaching force.

2. The method for monitoring a longitudinal displacement and a close-attaching force of a turnout tongue rail (102) and an external locking apparatus according to claim 1, whereby the processing the magnetic signal to acquire longitudinal displacement quantities of the tongue rail (102) and the external locking apparatus is specifically as follows:
converting the magnetic signal from the magnetic field inductive sensor (14) into a first digital quantity electrical signal, and processing the first digital quantity electrical signal to acquire longitudinal displacement distance information and longitudinal displacement direction information of the tongue rail (102) and the external locking apparatus.

3. The method for monitoring a longitudinal displacement and a close-attaching force of a turnout tongue rail (102) and an external locking apparatus according to claim 1, whereby the processing the optical fiber signal to acquire a turnout close-attaching force is specifically as follows:
converting the optical fiber signal from the optical fiber pin type sensor (15) into a second digital quantity electrical signal, and processing the second digital quantity electrical signal to acquire a turnout close-attaching force.

4. The method for monitoring a longitudinal displacement and a close-attaching force of a turnout tongue rail (102) and an external locking apparatus according to any one of claims 1-3, further comprising the following steps:
according to the acquired longitudinal displacement quantities of the tongue rail (102) and the external locking apparatus and the acquired turnout close-attaching force, determining a data relationship between the longitudinal displacement quantities and the turnout close-attaching force of the tongue rail (102) and the external locking apparatus.

5. The method for monitoring a longitudinal displacement and a close-attaching force of a turnout tongue rail (102) and an external locking apparatus according to any one of claims 1-3, further comprising the following steps:
according to the real-time acquired longitudinal displacement distance information and longitudinal displacement direction information of the tongue rail (102) and the external locking apparatus, generating a data curve of the longitudinal displacement quantity and time of the tongue rail (102) and the external locking apparatus; and
according to the real-time acquired turnout close-attaching force, generating a data curvature of the turnout close-attaching force and the time.

6. The method for monitoring longitudinal displacement and a close-attaching force of a turnout tongue rail (102) and an external locking apparatus according to any one of claims 1-3, further comprising the following steps:
in a case that longitudinal displacement distances of the tongue rail (102) and the external locking apparatus exceed a set value and/or in a case that the turnout close-attaching force exceeds a set value, giving an alarm through voice and/or an optical signal and sending alarm-maintaining text information to a maintainer.

7. A system for monitoring longitudinal displacement and a close-attaching force of a turnout tongue rail (102) and an external locking apparatus, comprising a magnetic grid ruler (13), a magnetic field inductive sensor (14), an optical fiber pin type sensor (15) and a data transmission processing apparatus,
whereby the magnetic field inductive sensor (14) is configured to: in a case that a tongue rail (102) connecting iron (5) and a connecting iron base (7) are relatively displaced, convert the number of acquired magnetic grids passing through a magnetic grid ruler (13) and a magnetic pickup sequence into a magnetic signal, the magnetic grid ruler (13) being arranged on the tongue rail (102) connecting iron (5), and the magnetic field inductive sensor (14) being arranged on the connecting iron base (7);
the optical fiber pin type sensor (15) is configured to: in a case that a latch hook assembly (2) pushes the connecting iron base (7), convert a force applied to the optical fiber pin type sensor (15) into an optical fiber signal, the optical fiber pin type sensor (15) being arranged in a pin hole on the connecting iron base (7), and the latch hook assembly (2) being connected to the connecting iron base (7) through the optical fiber pin type sensor (15);
the data transmission processing apparatus is configured to: process the received magnetic signal to acquire longitudinal displacement quantities of the tongue rail (102) and the external locking apparatus; and the data transmission processing apparatus is further configured to: process the received optical fiber signal to obtain a turnout close-attaching force.

8. The system for monitoring longitudinal displacement and a close-attaching force of a turnout tongue rail (102) and an external locking apparatus according to claim 7, whereby the data transmission processing apparatus comprises a collection and transmission unit and a handheld terminal,
the collection and transmission unit being configured to convert the magnetic signal acquired from the magnetic field inductive sensor (14) into a first digital quantity electrical signal and send the first digital quantity electrical signal to the handheld terminal through a wireless network,
the collection and transmission unit being further configured to convert the optical fiber signal acquired from the optical fiber pin type sensor (15) into a second digital quantity electrical signal and send the second digital quantity electrical signal to the handheld terminal through the wireless network,
the handheld terminal being configured to process the received first digital quantity electrical signal to acquire and display longitudinal displacement distance information and longitudinal displacement direction information of the tongue rail (102) and the external locking apparatus, and
the handheld terminal being further configured to process the received second digital quantity electrical signal to acquire and display the turnout close-attaching force.

9. The system for monitoring longitudinal displacement and a close-attaching force of a turnout tongue rail (102) and an external locking apparatus according to claim 7 or 8, further comprising an online remote monitoring system, whereby the online remote monitoring system is configured to: according to the acquired longitudinal displacement quantities of the tongue rail (102) and the external locking apparatus and the acquired turnout close-attaching force, determine a data relationship between the longitudinal displacement quantities and the turnout close-attaching force of the tongue rail (102) and the external locking apparatus;
the online remote monitoring system is further configured to: according to the real-time acquired longitudinal displacement distance information and longitudinal displacement direction information of the tongue rail (102) and the external locking apparatus, generate a data curve of the longitudinal displacement quantity and time of the tongue rail (102) and the external locking apparatus; and
the online remote monitoring system is further configured to: according to the real-time acquired turnout close-attaching force, generate a data curvature of the turnout close-attaching force and the time.

10. The system for monitoring a longitudinal displacement and a close-attaching force of a turnout tongue rail (102) and an external locking apparatus according to claim 9, whereby the online remote monitoring system is further configured to: in a case that longitudinal displacement distances of the tongue rail (102) and the external locking apparatus exceed a set value and/or in a case that the turnout close-attaching force exceeds a set value, give an alarm through voice and/or an optical signal and send alarm-maintaining text information to a maintainer.

## Patentansprüche

1. Verfahren zum Überwachen einer Längsverschiebung und einer nahanhaftenden Kraft einer Weichenzungenschiene (102) und einer externen Verriegelungsvorrichtung, die folgenden Schritte umfassend:
in einem Fall, in dem ein Verbindungseisen (5) und eine Verbindungseisenbasis (7) einer Zungenschiene (102) relativ verschoben werden, Umwandeln, durch einen Magnetfeld-Induktivsensor (14), der Anzahl von erfassten Magnetgittern, die durch einen Magnetgitterregler (13) verlaufen, und einer Magnettonabnehmersequenz in ein magnetisches Signal, wobei der Magnetgitterregler (13) auf dem Verbindungseisen (5) der Zungenschiene (102) angeordnet ist und der Magnetfeld-Induktivsensor (14) auf der Verbindungseisenbasis (7) angeordnet ist;
in einem Fall, in dem eine Rasthakenbaugruppe (2) die Verbindungseisenbasis (7) drückt, Umwandeln, durch einen Glasfasersensor (15) vom Steckertyp, einer Kraft, die auf den Glasfasersensor (15) vom Steckertyp ausgeübt wird, in ein Glasfasersignal, wobei der Glasfasersensor (15) vom Steckertyp in einem Steckerloch auf der Verbindungseisenbasis (7) angeordnet ist und die Rasthakenbaugruppe (2) durch den Glasfasersensor (15) vom Steckertyp mit der Verbindungseisenbasis (7) verbunden ist;
Verarbeiten des magnetischen Signals, um Längsverschiebungsausmaße der Zungenschiene (102) und der externen Verriegelungsvorrichtung zu erfassen; und
Verarbeiten des Glasfasersignals, um eine nahanhaftende Weichenkraft zu erfassen.

2. Verfahren zum Überwachen einer Längsverschiebung und einer nahanhaftenden Kraft einer Weichenzungenschiene (102) und einer externen Verriegelungsvorrichtung nach Anspruch 1, wobei das Verarbeiten des magnetischen Signals, um Längsverschiebungsausmaße der Zungenschiene (102) und der externen Verriegelungsvorrichtung zu erfassen, konkret folgendermaßen erfolgt:
Umwandeln des magnetischen Signals von dem Magnetfeld-Induktivsensor (14) in ein erstes elektrisches Signal der digitalen Größe und Verarbeiten des ersten elektrischen Signals der digitalen Größe, um Längsverschiebungsabstandsinformationen und Längsverschiebungsrichtungsinformationen der Zungenschiene (102) und der externen Verriegelungsvorrichtung zu erfassen.

3. Verfahren zum Überwachen einer Längsverschiebung und einer nahanhaftenden Kraft einer Weichenzungenschiene (102) und einer externen Verriegelungsvorrichtung nach Anspruch 1, wobei das Verarbeiten des Glasfasersignals, um eine nahanhaftende Weichenkraft zu erfassen, konkret folgendermaßen erfolgt:
Umwandeln des Glasfasersignals von dem Glasfasersensor (15) vom Steckertyp in ein zweites elektrisches Signal der digitalen Größe und Verarbeiten des zweiten elektrischen Signals der digitalen Größe, um eine nahanhaftende Weichenkraft zu erfassen.

4. Verfahren zum Überwachen einer Längsverschiebung und einer nahanhaftenden Kraft einer Weichenzungenschiene (102) und einer externen Verriegelungsvorrichtung nach einem der Ansprüche 1-3, ferner umfassend die folgenden Schritte:
gemäß den erfassten Längsverschiebungsausmaßen der Zungenschiene (102) und der externen Verriegelungsvorrichtung und der erfassten nahanhaftenden Weichenkraft, Bestimmen einer Datenbeziehung zwischen den Längsverschiebungsausmaßen und der nahanhaftenden Weichenkraft der Zungenschiene (102) und der externen Verriegelungsvorrichtung.

5. Verfahren zum Überwachen einer Längsverschiebung und einer nahanhaftenden Kraft einer Weichenzungenschiene (102) und einer externen Verriegelungsvorrichtung nach einem der Ansprüche 1-3, ferner umfassend die folgenden Schritte:
gemäß den in Echtzeit erfassten Längsverschiebungsabstandsinformationen und Längsverschiebungsrichtungsinformationen der Zungenschiene (102) und der externen Verriegelungsvorrichtung, Erzeugen einer Datenkurve des Längsverschiebungsausmaßes und der Längsverschiebungszeit der Zungenschiene (102) und der externen Verriegelungsvorrichtung; und
gemäß der in Echtzeit erfassten nahanhaftenden Weichenkraft, Erzeugen einer Datenkrümmung der nahanhaftenden Weichenkraft und der Zeit.

6. Verfahren zum Überwachen einer Längsverschiebung und einer nahanhaftenden Kraft einer Weichenzungenschiene (102) und einer externen Verriegelungsvorrichtung nach einem der Ansprüche 1-3, ferner umfassend die folgenden Schritte:
in einem Fall, in dem Längsverschiebungsabstände der Zungenschiene (102) und der externen Verriegelungsvorrichtung einen eingestellten Wert überschreiten, und/oder in einem Fall, in dem die nahanhaftende Weichenkraft einen eingestellten Wert überschreitet, Ausgeben eines Alarms durch Sprache und/oder ein optisches Signal und Senden von Alarmbeibehaltungstextinformationen an einen Betreiber.

7. System zum Überwachen einer Längsverschiebung und einer nahanhaftenden Kraft einer Weichenzungenschiene (102) und einer externen Verriegelungsvorrichtung, umfassend einen Magnetgitterregler (13), einen Magnetfeld-Induktivsensor (14), einen Glasfasersensor (15) vom Steckertyp und eine Datenübertragungsverarbeitungsvorrichtung,
wobei der Magnetfeld-Induktivsensor (14) zu Folgendem konfiguriert ist: in einem Fall, in dem ein Verbindungseisen (5) und eine Verbindungseisenbasis (7) einer Zungenschiene (102) relativ verschoben werden, Umwandeln der Anzahl von erfassten Magnetgittern, die durch einen Magnetgitterregler (13) verlaufen, und einer Magnettonabnehmersequenz in ein magnetisches Signal, wobei der Magnetgitterregler (13) auf dem Verbindungseisen (5) der Zungenschiene (102) angeordnet ist und der Magnetfeld-Induktivsensor (14) auf der Verbindungseisenbasis (7) angeordnet ist;
wobei der Glasfasersensor (15) vom Steckertyp zu Folgendem konfiguriert ist: in einem Fall, in dem eine Rasthakenbaugruppe (2) die Verbindungseisenbasis (7) drückt, Umwandeln einer Kraft, die auf den Glasfasersensor (15) vom Steckertyp ausgeübt wird, in ein Glasfasersignal, wobei der Glasfasersensor (15) vom Steckertyp in einem Steckerloch auf der Verbindungseisenbasis (7) angeordnet ist und die Rasthakenbaugruppe (2) durch den Glasfasersensor (15) vom Steckertyp mit der Verbindungseisenbasis (7) verbunden ist;
wobei die Datenübertragungsverarbeitungsvorrichtung zu Folgendem konfiguriert ist: Verarbeiten des empfangenen magnetischen Signals, um Längsverschiebungsausmaße der Zungenschiene (102) und der externen Verriegelungsvorrichtung zu erfassen; und wobei die Datenübertragungsverarbeitungsvorrichtung ferner zu Folgendem konfiguriert ist: Verarbeiten des empfangenen Glasfasersignals, um eine nahanhaftende Weichenkraft zu erhalten.

8. System zum Überwachen einer Längsverschiebung und einer nahanhaftenden Kraft einer Weichenzungenschiene (102) und einer externen Verriegelungsvorrichtung nach Anspruch 7, wobei die Datenübertragungsverarbeitungsvorrichtung eine Sammel- und Übertragungseinheit und eine tragbares Endgerät umfasst,
wobei die Sammel- und Übertragungseinheit dazu konfiguriert ist, das magnetische Signal, das von dem Magnetfeld-Induktivsensor (14) erfasst wird, in ein erstes elektrisches Signal der digitalen Größe umzuwandeln und das erste elektrische Signal der digitalen Größe durch ein drahtloses Netzwerk an das tragbare Endgerät zu senden,
wobei die Sammel- und Übertragungseinheit ferner dazu konfiguriert ist, das Glasfasersignal, das von dem Glasfasersensor (15) vom Steckertyp erfasst wurde, in ein zweites elektrisches Signal der digitalen Größe umzuwandeln und das zweite elektrische Signal der digitalen Größe durch das drahtlose Netzwerk an das tragbare Endgerät zu senden,
wobei das tragbare Endgerät dazu konfiguriert ist, das empfangene erste elektrische Signal der digitalen Größe zu verarbeiten, um Längsverschiebungsabstandsinformationen und Längsverschiebungsrichtungsinformationen der Zungenschiene (102) und der externen Verriegelungsvorrichtung zu erfassen, und
wobei das tragbare Endgerät ferner dazu konfiguriert ist, das empfangene zweite elektrische Signal der digitalen Größe zu verarbeiten, um die nahanhaftende Weichenkraft zu erfassen und anzuzeigen.

9. System zum Überwachen einer Längsverschiebung und einer nahanhaftenden Kraft einer Weichenzungenschiene (102) und einer externen Verriegelungsvorrichtung nach Anspruch 7 oder 8, ferner umfassend ein Online-Remote-Überwachungssystem, wobei das Online-Remote-Überwachungssystem zu Folgendem konfiguriert ist: gemäß den erfassten Längsverschiebungsausmaßen der Zungenschiene (102) und der externen Verriegelungsvorrichtung und der erfassten nahanhaftenden Weichenkraft, Bestimmen einer Datenbeziehung zwischen den Längsverschiebungsausmaßen und der nahanhaftenden Weichenkraft der Zungenschiene (102) und der externen Verriegelungsvorrichtung;
wobei das Online-Remote-Überwachungssystem ferner zu Folgendem konfiguriert ist: gemäß den in Echtzeit erfassten Längsverschiebungsabstandsinformationen und Längsverschiebungsrichtungsinformationen der Zungenschiene (102) und der externen Verriegelungsvorrichtung, Erzeugen einer Datenkurve des Längsverschiebungsausmaßes und der Längsverschiebungszeit der Zungenschiene (102) und der externen Verriegelungsvorrichtung; und
wobei das Online-Remote-Überwachungssystem ferner zu Folgendem konfiguriert ist: gemäß der in Echtzeit erfassten nahanhaftenden Weichenkraft, Erzeugen einer Datenkrümmung der nahanhaftenden Weichenkraft und der Zeit.

10. System zum Überwachen einer Längsverschiebung und einer nahanhaftenden Kraft einer Weichenzungenschiene (102) und einer externen Verriegelungsvorrichtung nach Anspruch 9, wobei das Online-Remote-Überwachungssystem zu Folgendem konfiguriert ist: in einem Fall, in dem Längsverschiebungsabstände der Zungenschiene (102) und der externen Verriegelungsvorrichtung einen eingestellten Wert überschreiten, und/oder in einem Fall, in dem die nahanhaftende Weichenkraft einen eingestellten Wert überschreitet, Ausgeben eines Alarms durch Sprache und/oder ein optisches Signal und Senden von Alarmbeibehaltungstextinformationen an einen Betreiber.

## Revendications

1. Procédé pour surveiller un déplacement longitudinal et une force de fixation de fermeture d'un rail de languette de branchement (102) et d'un appareil de verrouillage externe, comprenant les étapes suivantes :
dans un cas où un fer de liaison (5) de rail de languette (102) et une base de fer de liaison (7) sont déplacés l'un par rapport à l'autre, la conversion, à l'aide d'un capteur inductif de champ magnétique (14), du nombre de grilles magnétiques acquises passant à travers une règle à grille magnétique (13) et d'une séquence de captage magnétique en un signal magnétique, moyennant quoi la règle à grille magnétique (13) est agencée sur le fer de liaison (5) de rail de languette (102), et le capteur inductif de champ magnétique (14) est agencé sur la base de fer de liaison (7) ;
dans un cas où un ensemble crochet à linguet de sécurité (2) pousse la base de fer de liaison (7), la conversion, à l'aide d'un capteur de type cheville à fibre optique (15), d'une force appliquée au capteur de type cheville à fibre optique (15) en un signal de fibre optique, moyennant quoi le capteur de type cheville à fibre optique (15) est agencé dans un trou de cheville sur la base de fer de liaison (7), et l'ensemble crochet à linguet de sécurité (2) est relié à la base de fer de liaison (7) par l'intermédiaire du capteur de type cheville à fibre optique (15) ;
le traitement du signal magnétique pour acquérir des quantités de déplacement longitudinal du rail de languette (102) et de l'appareil de verrouillage externe ; et
le traitement du signal de fibre optique pour acquérir une force de fixation de fermeture de branchement.

2. Procédé pour surveiller un déplacement longitudinal et une force de fixation de fermeture d'un rail de languette de branchement (102) et d'un appareil de verrouillage externe selon la revendication 1, moyennant quoi le traitement du signal magnétique pour acquérir des quantités de déplacement longitudinal du rail de languette (102) et de l'appareil de verrouillage externe est spécifiquement le suivant :
la conversion du signal magnétique provenant du capteur inductif de champ magnétique (14) en un premier signal électrique de quantité numérique, et le traitement du premier signal électrique de quantité numérique pour acquérir des informations de distance de déplacement longitudinal et des informations de direction de déplacement longitudinal du rail de languette (102) et de l'appareil de verrouillage externe.

3. Procédé pour surveiller un déplacement longitudinal et une force de fixation de fermeture d'un rail de languette de branchement (102) et d'un appareil de verrouillage externe selon la revendication 1, moyennant quoi le traitement du signal de fibre optique pour acquérir une force de fixation de fermeture de branchement est spécifiquement le suivant :
la conversion du signal de fibre optique provenant du capteur de type cheville à fibre optique (15) en un deuxième signal électrique de quantité numérique, et le traitement du deuxième signal électrique de quantité numérique pour acquérir une force de fixation de fermeture de branchement.

4. Procédé pour surveiller un déplacement longitudinal et une force de fixation de fermeture d'un rail de languette de branchement (102) et d'un appareil de verrouillage externe selon l'une quelconque des revendications 1 à 3, comprenant en outre les étapes suivantes :
selon les quantités de déplacement longitudinal acquises du rail de languette (102) et de l'appareil de verrouillage externe et la force de fixation de fermeture de branchement acquise, la détermination d'une relation de données entre les quantités de déplacement longitudinal et la force de fixation fermeture de branchement du rail de languette (102) et de l'appareil de verrouillage externe.

5. Procédé pour surveiller un déplacement longitudinal et une force de fixation de fermeture d'un rail de languette de branchement (102) et d'un appareil de verrouillage externe selon l'une quelconque des revendications 1 à 3, comprenant en outre les étapes suivantes :
selon les informations de distance de déplacement longitudinal et les informations de direction de déplacement longitudinal acquises en temps réel du rail de languette (102) et de l'appareil de verrouillage externe, la génération d'une courbe de données de la quantité de déplacement longitudinal et du temps du rail de languette (102) et de l'appareil de verrouillage externe ; et
selon la force de fixation de fermeture de branchement acquise en temps réel, la génération d'une courbure de données de la force de fixation de fermeture de branchement et du temps.

6. Procédé pour surveiller un déplacement longitudinal et une force de fixation de fermeture d'un rail de languette de branchement (102) et d'un appareil de verrouillage externe selon l'une quelconque des revendications 1 à 3, comprenant en outre les étapes suivantes :
dans un cas où des distances de déplacement longitudinal du rail de languette (102) et de l'appareil de verrouillage externe dépassent une valeur définie et/ou dans un cas où la force de fixation de fermeture de branchement dépasse une valeur définie, le déclenchement d'une alarme par signal vocal et/ou optique et l'envoi d'informations textuelles de maintien d'alarme à un technicien de maintenance.

7. Système pour surveiller un déplacement longitudinal et une force de fixation de fermeture d'un rail de languette de branchement (102) et d'un appareil de verrouillage externe, comprenant une règle à grille magnétique (13), un capteur inductif de champ magnétique (14), un capteur de type cheville à fibre optique (15) et un appareil de traitement de transmission de données,
moyennant quoi le capteur inductif de champ magnétique (14) est configuré pour : dans un cas où un fer de liaison (5) de rail de languette (102) et une base de fer de liaison (7) sont déplacés l'un par rapport à l'autre, convertir le nombre de grilles magnétiques acquises passant à travers une règle à grille magnétique (13) et une séquence de captage magnétique en un signal magnétique, la règle à grille magnétique (13) étant agencée sur le fer de liaison (5) de rail de languette (102), et le capteur inductif de champ magnétique (14) étant agencé sur la base de fer de liaison (7) ;
le capteur de type cheville à fibre optique (15) est configuré pour : dans un cas où un ensemble crochet à linguet de sécurité (2) pousse la base de fer de liaison (7), convertir une force appliquée au capteur de type cheville à fibre optique (15) en un signal de fibre optique, le capteur de type cheville à fibre optique (15) étant agencé dans un trou de cheville sur la base de fer de liaison (7), et l'ensemble crochet à linguet de sécurité (2) étant relié à la base de fer de liaison (7) par l'intermédiaire du capteur de type cheville à fibre optique (15) ;
l'appareil de traitement de transmission de données est configuré pour : traiter le signal magnétique reçu afin d'acquérir des quantités de déplacement longitudinal du rail de languette (102) et de l'appareil de verrouillage externe ; et l'appareil de traitement de transmission de données est en outre configuré pour : traiter le signal de fibre optique reçu afin d'obtenir une force de fixation de fermeture de branchement.

8. Système pour surveiller un déplacement longitudinal et une force de fixation de fermeture d'un rail de languette de branchement (102) et d'un appareil de verrouillage externe selon la revendication 7, moyennant quoi l'appareil de traitement de transmission de données comprend une unité de collecte et de transmission et un terminal de poche,
l'unité de collecte et de transmission étant configurée pour convertir le signal magnétique acquis à partir du capteur inductif de champ magnétique (14) en un premier signal électrique de quantité numérique et envoyer le premier signal électrique de quantité numérique au terminal de poche via un réseau sans fil,
l'unité de collecte et de transmission étant en outre configurée pour convertir le signal de fibre optique acquis à partir du capteur de type cheville à fibre optique (15) en un deuxième signal électrique de quantité numérique et envoyer le deuxième signal électrique de quantité numérique au terminal de poche via le réseau sans fil,
le terminal de poche étant configuré pour traiter le premier signal électrique de quantité numérique reçu afin d'acquérir et d'afficher des informations de distance de déplacement longitudinal et des informations de direction de déplacement longitudinal du rail de languette (102) et de l'appareil de verrouillage externe, et
le terminal de poche étant en outre configuré pour traiter le deuxième signal électrique de quantité numérique reçu afin d'acquérir et d'afficher la force de fixation de fermeture de branchement.

9. Système pour surveiller un déplacement longitudinal et une force de fixation de fermeture d'un rail de languette de branchement (102) et d'un appareil de verrouillage externe selon la revendication 7 ou 8, comprenant en outre un système de surveillance à distance en ligne, moyennant quoi le système de surveillance à distance en ligne est configuré pour : selon les quantités de déplacement longitudinal acquises du rail de languette (102) et de l'appareil de verrouillage externe et la force de fixation de fermeture de branchement acquise, déterminer une relation de données entre les quantités de déplacement longitudinal et la force de fixation de fermeture de branchement du rail de languette (102) et de l'appareil de verrouillage externe ;
le système de surveillance à distance en ligne est en outre configuré pour : selon les informations de distance de déplacement longitudinal et les informations de direction de déplacement longitudinal acquises en temps réel du rail à languette (102) et de l'appareil de verrouillage externe, générer une courbe de données de la quantité de déplacement longitudinal et du temps du rail à languette (102) et de l'appareil de verrouillage externe ; et
le système de surveillance à distance en ligne est en outre configuré pour : selon la force de fixation de fermeture de branchement acquise en temps réel, générer une courbure de données de la force de fixation de fermeture de branchement et du temps.

10. Système pour surveiller un déplacement longitudinal et une force de fixation de fermeture d'un rail de languette de branchement (102) et d'un appareil de verrouillage externe selon la revendication 9, moyennant quoi le système de surveillance à distance en ligne est en outre configuré pour : dans un cas où des distances de déplacement longitudinal du rail de languette (102) et de l'appareil de verrouillage externe dépassent une valeur définie et/ou dans un cas où la force de fixation de fermeture de branchement dépasse une valeur définie, déclencher une alarme par signal vocal et/ou optique et envoyer des informations textuelles de maintien d'alarme à un technicien de maintenance.
